Europäisches Patentamt

European Patent Office

Office européen des brevets

(19)

(11) Veröffentlichungsnummer: **0 318 769**
**A2**

## (12) EUROPÄISCHE PATENTANMELDUNG

(21) Anmeldenummer: 88119181.1

(22) Anmeldetag: 18.11.88

(51) Int. Cl.⁴: **B62D 21/15**

(30) Priorität: 28.11.87 DE 3740402

(43) Veröffentlichungstag der Anmeldung:
07.06.89 Patentblatt 89/23

(84) Benannte Vertragsstaaten:
**DE ES FR GB IT**

(71) Anmelder: **AUDI AG**
**Postfach 220**
**D-8070 Ingolstadt(DE)**

(72) Erfinder: **Enning, Norbert**
**Am Spielplatz 1**
**D-8079 Kipfenberg(DE)**
Erfinder: **Reiter, Karl**
**Salvatorstrasse 16**
**D-8071 Wettstetten(DE)**

(74) Vertreter: **Engelhardt, Harald**
**AUDI AG Patentabteilung Postfach 220**
**D-8070 Ingolstadt(DE)**

(54) **Rahmenanordnung für ein Kraftfahrzeug.**

(57) Die Erfindung betrifft eine Rahmenanordnung für ein Kraftfahrzeug mit einem Rahmen mit Längsträgern. Erfindungsgemäß sind die Längsträger (1) vor der Aggregateaufhängung (2) geteilt, wobei die vorderen ersten Längsträgerteile (3) als Deformationselemente ausgebildet sind, die mit den hinteren zweiten Längsträgerteilen (4) über Verschraubungen (5) verbunden sind. Die Längsträgerteile (3) sollen dabei so dimensioniert sein, daß sie bei einem Aufprall mit geringer Geschwindigkeit die Aufprallenergie durch Verformung aufnehmen und die zweiten Längsträgerteile (4) noch nicht verformt werden. Dadurch kann eine Reparatur durch Austauschen der ersten Längsträgerteile (3) mit wenig Aufwand und kostengünstig durchgeführt werden. In einer weiteren Ausgestaltung der Erfindung ist vorgesehen, die Anlageflächen der Verbindung (5) rotationssymmetrisch auszubilden, so daß die vorderen Längsträgerteile (3) zum Ausgleich von Fertigungstoleranzen im Raum verdreht und eingestellt werden können. Dies ist besonders vorteilhaft bei der Verwendung eines an sich bekannten, abnehmbaren Vorderrahmens.

FIG. 1

## Rahmenanordnung für ein Kraftfahrzeug

Die Erfindung betrifft eine Rahmenanordnung für ein Kraftfahrzeug nach dem Oberbegriff des Anspruchs 1.

Bei einem Aufprall eines Fahrzeugs soll zum Schutz der Fahrzeuginsassen deren Abbremsung und Verzögerung über Deformationselemente und Deformationszonen am Fahrzeug verringert werden.

Es sind Pralldämpfer bekannt, über die die Stoßstangen mit der Fahrzeugkarosserie verbunden sind. Bei einer Aufprallgeschwindigkeit bis ca. 5km/h können die Stoßstangen in den Pralldämpfern elastisch ausweichen, d. h. die Stoßstangen nehmen nach dem Aufprall ihre ursprüngliche Lage wieder ein, so daß keine Reparaturmaßnahmen erforderlich sind. Die kleinen Geschwindigkeiten bis ca. 5 km/h, bei denen diese Maßnahme wirksam ist, werden aber meist nur bei Rangiervorgängen gefahren. Bei einem Aufprall mit noch relativ geringen Geschwindigkeiten von 15 bis 20 km/h treten bereits so starke Verformungen, insbesondere in den Längsträgern auf, daß eine Reparatur aufwendig und teuer wird.

Ein weiteres Problem bei der Karosserieherstellung liegt in den relativ großen Fertigungstoleranzen. Es ist daher üblich, Blechteile über Einstellelemente, wie beispielsweise Langlochverbindungen, an der Karosserie anzubringen, um gleichmäßig durchgehende Flächen, gleiche Spaltbreiten, etc. zu erhalten.

Auch Blechteile, die an den Vorderseiten von durchgehenden Karosserielängsträgern angebracht sind, wie z. B. ein Windfang oder Frontspoiler, sind in der Regel einstellbar befestigt. Diese Einstellelemente sind teilweise kompliziert ausgeführt und entsprechend teuer sowie schwer zugänglich und damit wenig montagefreundlich.

Es ist weiter bekannt (US-PS 3 791 472), den vorderen Bereich der Rahmenanordnung einer Karosserie im Bereich des Motorraums als abnehmbaren, H-förmigen Vorderrahmen (H-Rahmen) auszubilden. Auf diesen Vorderrahmen können der Motor und weitere Aggregate bereits vor der Endmontage vormontiert werden, wobei dieser dann von unten her in die Karosserie eingesetzt und mit der Bodengruppe verschraubt wird. Diese Schraubverbindungen sind ersichtlich stark und fest auszuführen. Einstellmöglichkeiten, um evtl. die Längsträger des Vorderrahmens aufgrund optischer Erfordernisse zum Ausgleich von Toleranzen einzustellen, sind somit bei diesen Verschraubungen nicht zweckmäßig anzubringen. Es sind somit weiter Einstellelemente für die mit dem Vorderrahmen verbundenen, von außen sichtbaren Karosserieteile zum Ausgleich von Toleranzen erforderlich.

Aufgabe der Erfindung ist es demgegenüber, eine gattungsgemäße Rahmenanordnung für ein Kraftfahrzeug so weiterzubilden, daß Reparaturen an den Längsträgern nach einem Aufprall bei kleineren Geschwindigkeiten einfach und kostengünstig durchzuführen sind.

Eine weitere Aufgabe der Erfindung besteht darin, die Einstellung und Ausrichtung von mit den Längsträgern verbundenen Karosserieteilen zu vereinfachen.

Die Aufgabe wird mit den kennzeichnenden Merkmalen des Anspruchs 1 gelöst.

Gemäß Anspruch 1 sind die Längsträger vor der Aggregateaufhängung geteilt und die vorderen ersten Längsträgerteile als Deformationselemente ausgebildet, die mit den hinteren zweiten Längsträgerteilen verschraubt sind. Die an jedem Längsträger angebrachten vorderen Längsträgerteile können daher gezielt für eine Verformung zur Aufnahme möglichst großer Energien bei einem Aufprall ausgebildet werden. Da die Teilung der Längsträger vor den Aggregateträgern und auch vor den Fahrwerksträgern liegt, haben die Deformationselemente weder hohe statische noch dynamische Kräfte im Fahrbetrieb aufzunehmen. Die hinteren zweiten Längsträgerteile können in Verbindung mit den vorderen Deformationselementen vorteilhaft mehr auf Festigkeit ausgelegt sein.

Durch die einfache Schraubverbindung stellt somit das jeweilige vordere Längsträgerteil ein leicht auswechselbares Deformationselement dar, das etwa so ausgelegt sein soll, daß bei einem Aufprall bis ca. 15 km/h keine Verformung in den hinteren zweiten Längsträgerteilen auftritt. Somit fallen deutlich geringere Reparaturkosten an, was z. B. bei der Typschadenprüfung zu einer günstigeren Typschadeneinstufung führt.

Bevorzugt wird die beschriebene und weiter in den Unteransprüchen ausgeführte Anordnung im vorderen Fahrzeugbereich eingesetzt. Eine Teilung der Längsträger, insbesondere mit den in den Unteransprüchen angeführten Merkmalen und Ausführungen der Verbindungsstellen, ist auch im rückwärtigen Fahrzeugbereich bei gleicher Aufgabenstellung möglich und soll von der Anmeldung mit umfaßt werden.

Mit Anspruch 2 wird eine bevorzugte Ausbildung der Anlageflächen als Rotationsflächen angegeben, wodurch eine Verstellung und damit eine Einstellung des ersten gegenüber dem zweiten Längsträger möglich ist. Als kostengünstige und montagefreundliche Verbindung wird dazu eine zentrale Schraubverbindung durch die Anlageflächen benutzt.

Die Anlageflächen können dabei nach Anspruch 3 kugelförmig gewählt sein, wodurch eine Drehung und damit Einstellung um alle drei Raumachsen möglich ist.

Je nach den vorliegenden Gegebenheiten kann es jedoch günstig sein, nur eine Drehbarkeit um eine Achse vorzusehen, d. h. die Anlageflächen als Zylinderteilflächen oder als Kegelflächen gemäß den Ansprüchen 4 oder 5 auszubilden. Die Zylinderachsen sind dabei zweckmäßig quer zur Längsträgerrichtung vertikal oder horizontal liegend gewählt. Bei der Verwendung von Zylinder- und/oder Kegelflächen können durch die Unterdrückung einer Drehachse gegenüber kugeligen Anlageflächen Torsionen in den Längsträgern besser durch Formschluß aufgenommen werden. Weiter können Keilwirkungen erzielt werden, wodurch eine Kraftverstärkung an den Verbindungsflächen auftritt. Ein weiterer Vorteil liegt in der selbsttätigen Zentrierung an den rotationssymmetrischen Anlageflächen.

Die Fixierung nach der Einstellung erfolgt an allen vorstehenden Ausführungen mit rotationssymmetrischen Anlageflächen zumindest in einer Drehrichtung durch Reibschluß. Bei einem starken Aufprall, insbesondere bei einem Seitenaufprall, besteht daher die Gefahr, daß der Reibschluß den hohen auftretenden Kräften nicht Stand hält und die Längsträger an den Verbindungsstellen zwischen dem ersten und zweiten Längsträgerteil nachgeben und unerwünscht abknicken. Um dies zu vermeiden, wird mit Anspruch 6 vorgeschlagen, für diesen Fall begrenzende Anschläge anzubringen. Da die Einstellung zwischen dem ersten und zweiten Längsträgerteil nur über eine geringe Abweichung von der Längsausrichtung erfolgt, braucht der Einstellweg an der Verbindung nur gering bemessen zu sein und die Anschläge kommen bereits nach nur einer geringen Relativbewegung zur Anlage und damit zur Wirkung. Es versteht sich, daß je nach Verwendung einer kugeligen oder zylindrischen oder kegeligen Anlagefläche die Anschläge so anzubringen sind, daß die mögliche Dreh- bzw. Einstellbewegung begrenzt ist. Insbesondere wird dadurch auch erreicht, daß die zentrale Verbindungsschraube nicht durch seitliche Kräfte abgeschert werden kann. Ansonsten wird mit der nur einen Schraube eine hohe Steifigkeit der Verbindung erreicht.

Nach Anspruch 7 ist es zweckmäßig, die als Deformationselemente ausgebildeten Längsträgerteile aus Aluminium-Strang-Profilen herzustellen.

Eine zweckmäßige Ausbildung der Anlageflächen wird nach Anspruch 8 durch ein Kopfteil aus Aluminiumguß am ersten Längsträgerteil erhalten, das an einer entsprechend geformten Fläche des zweiten Längsträgerteils aus Stahlblech bzw. des weiter unten beschriebenen Vorderrahmens anliegt.

Eine besonders vorteilhafte Lösung einer Rahmenanordnung ergibt sich, wenn nach Anspruch 9 im vorderen Bereich der Rahmenanordnung ein abnehmbarer Vorderrahmen vorgesehen ist, der mit wenigstens einer vorderen und hinteren Verschraubung mit jeweils einem Längsträger verbunden ist. Die Einstellung und Justierung von Karosserieaußenteilen erfolgt dann im vorderen Teil über die einstellbaren, vorderen Längsträgerteile. Bei einem Aufprall mit weniger hohen Geschwindigkeiten wird der Vorderrahmen mit den daran montierten Aggregaten und Fahrwerksteilen praktisch nicht in Mitleidenschaft gezogen.

In einer Ausführungsform nach Anspruch 10 wird der Vorderrahmen insgesamt am zweiten Längsträgerteil angebracht,

In der Ausführungsform nach Anspruch 11 ist der Vorderrahmen mit seiner vorderen Verbindung mit dem zweiten Längsträgerteil verbünden, das am Vorderrahmen aufhört. Ein Längsträgerteil des Vorderrahmens ist dann mit dem ersten Längsträgerteil einstellbar verbunden.

Eine besonders einfache Verbindung ergibt sich nach Anspruch 12 dann, wenn eine zentrale Schraube sowohl zur Befestigung des Vorderrahmens als auch zugleich zur Befestigung des ersten Längsträgerteils verwendet wird.

Die zur Einstellung verwendeten rotationssymmetrischen Flächen können in Richtung der Längsträger sowohl konkav als auch konvex ausgebildet sein.

Anhand einer Zeichnung wird die Erfindung mit weiteren Einzelheiten, Merkmalen und Vorteilen näher erläutert.

Es zeigen

Fig. 1 eine schematische Darstellung eines Längsschnitts durch ein Fahrzeug im Bereich der vorderen Rahmenanordnung mit geteilten Längsträgern und deren Verbindung,

Fig. 2 eine vergrößerte Darstellung einer ersten Ausführung im Bereich der Verbindung der Längsträgerteile,

Fig. 3 eine zweite Ausführung einer Verbindung mit Anschlägen,

Fig. 4 eine dritte Ausführung einer Verbindung mit nur einer Schraube zur zusätzlichen Verbindung eines Vorderrahmens und

Fig. 5 bis 7 Anordnungen eines geteilten Längsträgers in Verbindung mit einem Vorderrahmen (H-Rahmen).

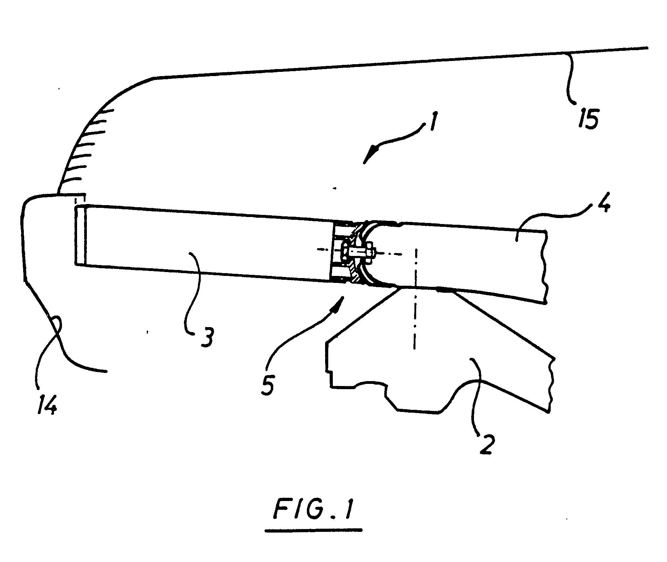

In Fig. 1 ist ein schematischer Schnitt durch einen Teil des Vorderwagens eines Kraftfahrzeugs dargestellt mit einem Längsträger 1, einem Gußteil 2 zur Aufnahme von Fahrwerk und Motor, einem Stoßfänger 14 und einer Motorhaube 15. Der Längsträger 1 besteht aus einem vorderen ersten Längsträgerteil 3 und einem hinteren zweiten Längsträgerteil 4, das Bestandteil eines H-förmigen Vorderrahmens sein kann und an dem das Gußteil 2 angeschraubt ist. Es versteht sich, daß eine zweite parallele Längsträgeranordnung am Fahrzeugboden vorgesehen ist.

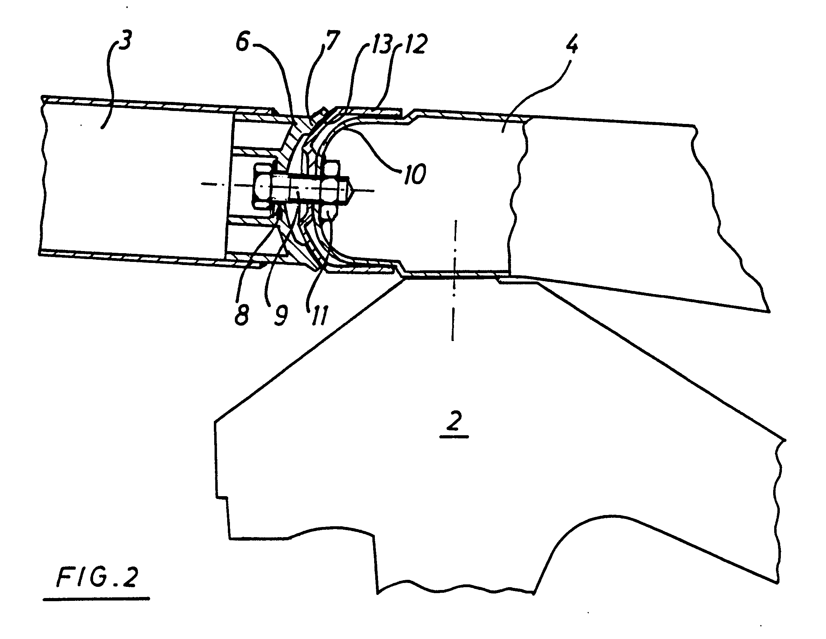

Die Längsträgerteile 3 und 4 sind mit einer Verschraubung 5 verbunden, die vergrößert in Fig. 2 dargestellt ist.

Das Längsträgerteil 3 ist als Aluminium-Strang-Profil ausgebildet und mit einem eingesteckten Kopfteil 6 versehen, das als Aluminiumgußteil gefertigt ist. Das Kopfteil 6 enthält eine kugelpfannenförmige Anlagefläche 7 sowie eine zentrale Bohrung 8 zur Aufnahme eines Schraubenbolzens 9.

Das zweite Längsträgerteil 4 ist in üblicher Weise aus Stahlblech gefertigt und an seiner Stirnseite 10 zur Mitte hin abgebogen. Dort ist an einer zentralen Bohrung eine Schraubenmutter 11 angeschweißt. Auf diesen vorderen Teil des Längsträgers 4 ist ein zweites Blech- oder Aluminiumgußteil als Kappe 12 aufgesetzt. Diese Kappe 12 weist eine kugelige Anlagefläche 13 entsprechend der kugelpfannenförmigen Anlagefläche 7 auf.

Die dargestellte Anordnung hat folgende Funktion: Bei der Montage wird das vordere, erste Längsträgerteil 3 bzw. das Kopfteil 6 mit einer Anlagefläche 7 an die Anlagefläche 3 des hinteren zweiten Längsträgerteils 4 bzw. der Kappe 12 herangeführt und von vorne her mit dem Schraubenbolzen 9 fixiert. Zum Ausgleich von Toleranzen können beide Längsträgerteile über die kugelpfannenförmige Verbindung zum Ausgleich der Toleranzen gegeneinander verstellt werden. Da die vorderen Längsträgerteile 3 relativ lang sein können, wie aus Fig. 1 zu ersehen, sind ersichtlich nur wenige Winkelgrade für eine Verstellung von mit diesen Teilen verbundenen Karosserieteilen notwendig. Beispielsweise könnte am vorderen Längsträgerteil 3 der vordere Stoßfänger 14 oder ein Windfang angebracht sein.

Das Gußteil 2 zur Aufnahme von Fahrwerk und Motor ist hinter der Verschraubung 5 angebracht, so daß auf das vordere Längsträgerteil nur geringe statische und dynamische Kräfte einwirken.

Bei einem Aufprall, beispielsweise bei einem Unfall, mit einer Geschwindigkeit, die etwa einer Crash-Geschwindigkeit bis 15 km/h entspricht, wirkt das Längsträgerteil 3 als Deformationselement, das die Aufprallenergie aufnimmt, wobei das Längsträgerteil 4 noch nicht verformt wird. Zweckmäßig werden die daran über das Gußteil 2 angebrachten Aggregate ebenfalls so angeordnet, daß sie möglichst nicht in Mitleidenschaft gezogen werden. Die Reparatur eines solchen Schadens erfolgt dann einfach so, daß mit wenig Aufwand die deformierten Längsträgerteile 3 abgeschraubt und durch neue Teile ersetzt werden. Eine aufwendige Rahmenreparatur ist somit nicht erforderlich.

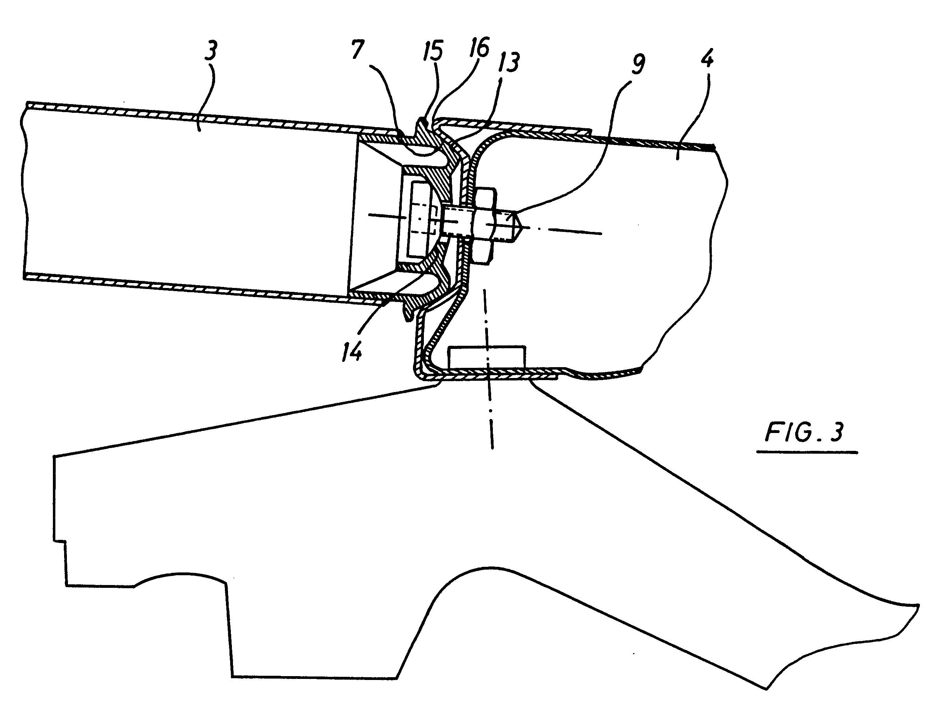

Die Ausführungsform nach Fig. 3 entspricht im wesentlichen der Ausführungsform nach Fig. 2. Auch hier sind ein zentraler Schraubenbolzen 9 und etwa kugelige Anlageflächen 7 und 13 vorgesehen. Für eine gute Verstellmöglichkeit ist auch die Anlagefläche 14 des Schraubenkopfs kugelig ausgeführt. Für eine Begrenzung des Verstellwegs, beispielsweise bei einem Seitenaufprall, ist ein umlaufender Bund 15 als Anschlag gegen eine umlaufende Anschlagfläche 16 vorgesehen,

Fig. 3 kann aber auch als Ausführungsform betrachtet werden, bei der die Anlageflächen etwa zylindrisch sind, wobei die Zylinderachse senkrecht auf der Zeichenebene steht. Dadurch wäre eine Einstellung nur auf und ab in der Zeichenebene möglich, soweit dies der Anschlag 15 gegen die Anschlagfläche 16 zuläßt.

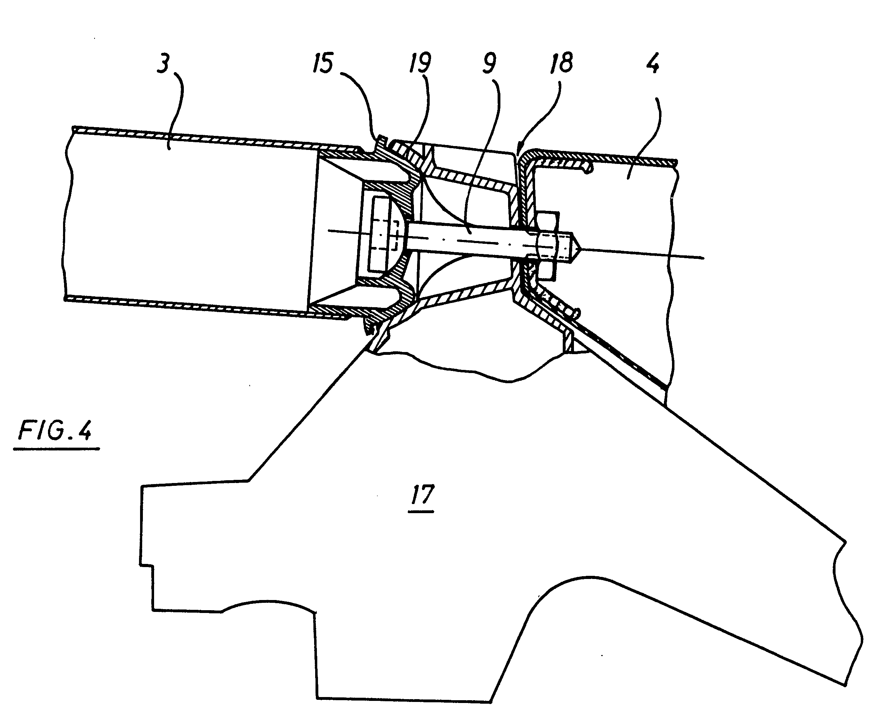

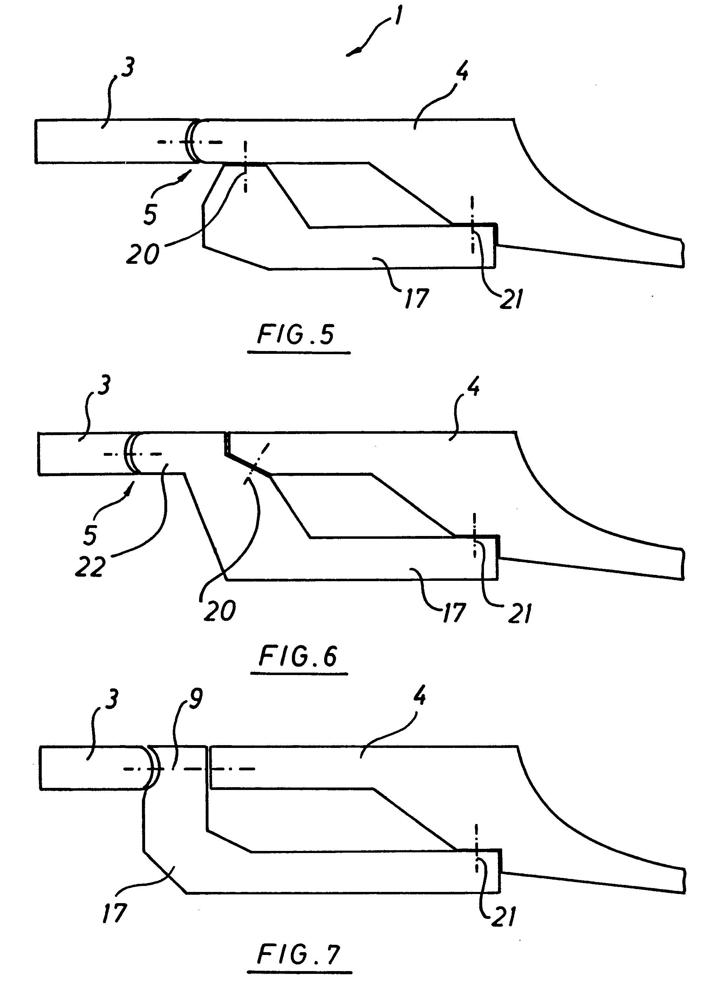

Fig. 4 zeigt eine Ausführungsform, bei der ein Vorderrahmen 17 entsprechend der Fig. 7 zusammen mit einem vorderen ersten Längsträgerteil 3 und einem zweiten hinteren Längsträgerteil 4 zwischen diesen nur mit einem einzigen Schraubbolzen 9 gehalten und befestigt ist. Die Anlageflächen 18 zwischen dem Vorderrahmenteil und dem zweiten Längsträgerteil 4 sind flach und eben, während die anderen Anlageflächen 19 zwischen dem Vorderrahmenteil und dem ersten Längsträgerteil 3 etwa kegelig für eine Einstellung ausgebildet sind. Damit werden mit nur einem Schraubbolzen 9 der Vorderrahmen und das zweite Längsträgerteil 4 und einstellbar zugleich das erste Längsträgerteil 3 verbunden.

In Fig. 5 ist der Karosserielängsträger 1 in die beiden Längsträgerteile 3 und 4 mit einer einstellbaren Verbindung bzw. Verschraubung 5 geteilt. Mit einer vorderen und hinteren Verschraubung 20, 21 ist ein abnehmbarer Vorderrahmen (H-Rahmen) 17 mit dem hinteren zweiten Längsträgerteil verbunden.

In einer anderen Ausführungsform nach Fig. 6 hat der mit dem zweiten Längsträgerteil 4 verbundene Vorderrahmen 17 einen Fortsatz 22 nach vorne, wo sich die verstellbare Verschraubung 5 bzw. das vordere Längsträgerteil 3 anschließt.

Mit Fig. 7 ist schematisch die Ausführungsform nach Fig. 4 verdeutlicht, wo mit nur einem zentralen Schraubenbolzen 9 das vordere Längsträgerteil 3, der vordere Bereich des Vorderrahmens 17 und das zweite Längsträgerteil 4 verbunden sind.

## Ansprüche

1. Rahmenanordnung für ein Kraftfahrzeug, mit einem Rahmen mit Längsträgern, dadurch gekennzeichnet, daß die Längsträger (1) vor der Aggregateaufhängung (2) geteilt sind, und

die vorderen ersten Längsträgerteile (3) als Deformationselemente ausgebildet sind, die mit den hinteren zweiten Längsträgerteilen (4) verschraubt (5) sind.

2. Rahmenanordnung nach Anspruch 1, dadurch gekennzeichnet, daß die Anlageflächen (7, 13; 19) zwischen den ersten und zweiten Längsträgerteilen (3, 4) als Rotationsflächen ausgebildet sind, so daß eine Verstellung gegeneinander möglich ist und daß zur Verbindung und Fixierung der Längsträgerteile (3, 4) eine in Richtung der Längsträger weisende, zentrale Schraube (9, 11) durch die Anlageflächen (7, 13; 19) vorgesehen ist.

3. Rahmenanordnung nach Anspruch 2, dadurch gekennzeichnet, daß die Anlageflächen (7, 13) als Kugelpfannenteile ausgebildet sind.

4. Rahmenanordnung nach Anspruch 2, dadurch gekennzeichnet, daß die Anlageflächen als Zylinderteilflächen ausgebildet sind.

5. Rahmenanordnung nach Anspruch 2, dadurch gekennzeichnet, daß die Anlageflächen (19) als Kegelflächen ausgebildet sind.

6. Rahmenanordnung nach einem der Ansprüche 2 bis 5, dadurch gekennzeichnet, daß an dem ersten und zweiten Längsträgerteil (3, 4), insbesondere an den Anlageflächen (7, 13; 19), die Verstellung begrenzende Anschläge (15) angebracht sind.

7. Rahmenanordnung nach einem der Ansprüche 1 bis 6, dadurch gekennzeichnet, daß die ersten Längsträgerteile (3) Aluminium-Strang-Profile sind.

8. Rahmenanordnung nach einem der Ansprüche 1 bis 7, dadurch gekennzeichnet, daß das jeweils erste Längsträgerteil (3) ein Kopfteil (6) aus Aluminiumguß aufweist.

9. Rahmenanordnung nach einem der Ansprüche 1 bis 8, dadurch gekennzeichnet, daß in an sich bekannter Weise im vorderen Bereich der Rahmenanordnung ein abnehmbarer Vorderrahmen (17) (H-Rahmen) vorgesehen ist, der mit wenigstens einer vorderen und hinteren Verschraubung (20, 21) mit jeweils dem zweiten Längsträgerteil (4) verbunden ist.

10. Rahmenanordnung nach Anspruch 9, dadurch gekennzeichnet, daß die Schraubverbindung (5) zwischen dem ersten und zweiten Längsträgerteil (3, 4) vor der vorderen Verschraubung (20) des Vorderrahmens (17) liegt.

11. Rahmenanordnung nach Anspruch 9, dadurch gekennzeichnet, daß der Vorderrahmen (17) durch dessen vordere Verschraubungen (20) mit den zweiten Längsträgerteilen (4) verbun den ist und die vorderen ersten Längsträgerteile (3) insbesondere über die rotationssymmetrischen Anlageflächen (7, 13; 19) mit den zentralen Schrauben (9) mit dem Vorderrahmen (17) bzw. dessen Längsträgern verbunden sind.

12. Rahmenanordnung nach Anspruch 11, dadurch gekennzeichnet, daß die Anlageflächen (18) zwischen Vorderrahmen (17) und zweitem Längsträgerteil (4) und die Anlageflächen (19) zwischen Vorderrahmen (17) und erstem Längsträgerteil (3) in Richtung des Längsträgers etwa quer dazu hintereinander liegen und für die beiden Verbindungen nur eine zentrale durchgehende Verschraubung (9) verwendet ist.

FIG.1

FIG.2

FIG.3

FIG.4

3    15   19   9   18   4

17

EP 0 318 769 A2

EP 0 318 769 A2

FIG.5

FIG.6

FIG.7